# EUROPÄISCHE PATENTANMELDUNG

(11) **EP 1 566 369 A1**
(43) Veröffentlichungstag der Anmeldung: **24.08.2005**
(21) Anmeldenummer: 04090058.1
(22) Anmeldetag: 19.02.2004
(51) Int. Cl.: C04B 28/02

(54) **Mittel und Verwendungen zum Behandeln und Vergüten von Baustoffen, Mineralgemischen und Mineralfarben sowie Verfahren hierfür**

(71) Anmelder: BEAUTY FOR LIFE LTD., London W1J 9EJ (GB)
(72) Erfinder: Duda, Karsten, 89547 Gerstetten (DE)
(74) Vertreter: Hannig, Wolf-Dieter

(57) **Zusammenfassung**

Die Erfindung betrifft ein Mittel und Verwendungen zum Behandeln und Vergüten von Baustoffen, Mineralgemischen und Mineralfarben sowie Verfahren hierfür.

Der Erfindung liegt die Aufgabe zugrunde, ein Mittel, ein Verfahren und Verwendungen der eingangs genannten Art anzugeben, mit denen es möglich ist, kapillarporige Baustoffe von Alt- und Neubauten, Mineralgemische und Mineralfarben gleichermaßen mit hoher Wirksamkeit und einfacher Handhabung unter Erreichung einer langen Schutzdauer lölsungsmittel- und kunstharzfrei zu hydrophobieren und/oder gegen Feuchtigkeit zu sperren, ohne dass eine nachfolgende Beschichtung des Baustoffes beeinträchtigt, seine Dampfdurchlässigkeit stark verringert und die Eigenfarbe des Baustoffes, des Mineralgemisches oder der Mineralfarbe verändert wird. Diese Aufgabe wird dadurch gelöst, dass das Mittel 60,0 bis 75,0 Masse-% Wasser, 15,0 bis 22,0 Masse-% Seife, 1,0 bis 7,0 Masse-%iner Carbonatverbindung, 2,0 bis 6,0 Masse-% Natriumhydroxid und 1,0 bis 7,0 Masse-% Füllstoffe enthält.

## Beschreibung

Die Erfindung betrifft ein Mittel zum Behandeln, insbesondere Imprägnieren, Abdichten, Sperren, Verfestigen, Konservieren, Trockenlegen und/oder Trockenhalten von kapillarporigen Baustoffen wie Ziegel-, Natur- und Kalksandsteine und/oder Betonwerkstoffe, ein Mittel zum Vergüten, insbesondere Hydrophobieren, Sperren und Verfestigen von Mineralgemischen wie Mörtel, Estrich, Schlämmen und Beton sowie ein Mittel zum Hydrophobieren von Mineralfarben.

Die Erfindung betrifft auch ein Verfahren zum Behandeln, insbesondere Hydrophobieren, Imprägnieren, Abdichten, Sperren, Verfestigen, Konservieren, Trockenlegen und/oder Trockenhalten von kapillarporigen Baustoffen wie Ziegel-, Natur- und Kalksandsteine und/oder Betonwerkstoffe, ferner ein Verfahren zum Vergüten, insbesondere Hydrophobieren, Sperren und Verfestigen von Mineralgemischen wie Mörtel, Estrich, Schlämmen und Beton sowie ein Verfahren zum Hydrophobieren von Mineralfarben.

Des weiteren betrifft die Erfindung die Verwendung des Mittels zum Hydrophobieren, Imprägnieren, Abdichten, Sperren, Verfestigen, Konservieren, Trocknen und/oder Trockenhalten von kapillarporigen Baustoffen wie Ziegel-, Natur- und Kalksteine und/oder Betonwerkstoffe, ferner die Verwendung zum Vergüten, insbesondere Hydrophobieren, Sperren und Verfestigen, von Mineralgemischen wie Mörtel, Estrich, Schlämmen und Beton sowie die Verwendung zum Hydrophobieren von Mineralfarben.

Aus der DE 38 04 741 A1 ist ein Mörtel mit einem Mittel zum Trockenlegen und/oder Trockenhalten von Mauerwerk mit Silikaten und Karbonaten bekannt, dass 30 bis 50 Gew.-% Kalziumhydroxyd, 5 bis 20 Gew.-% Seife, 25 bis 40 Gew.-% Wasser, 0,5 bis 5 Gew.-% eine Karbonatverbindung, 1 bis 8 Gew.-% Silikatverbindung und 0,5 bis 5 Gew.-% Füllstoffe enthält.

Dieser bekannte Mörtel soll geeignet sein, nasses bzw. durchfeuchtetes Mauerwerk trockenzulegen und/oder trocken zu halten. Dies mag für den äußeren Schutz des Mauerwerks gegen oberflächlich eindringende Nässe durch Verputzen durchaus zutreffen.

Vorhandenes Mauerwerk kann durch Verputzen jedoch nicht gegen aufsteigende Feuchtigkeit bzw. Nässe geschützt werden. Ebenso ist es nicht möglich, nasses Mauerwerk allein durch Verputzen mit einem Mörtel trocken zu legen und trocken zu halten. Dies wird nur durch Horizontalsperren erreicht, die in das vorhandene Mauerwerk eingebracht werden müssen. Dazu ist das bekannte Mörtel ungeeignet, weil der hohe Kalziumhydrat- und/oder Kalziumhydroxyd-Gehalt zu einer sehr starken Wasserabstoßung und zu einer sehr schnellen Verstopfung der Verteilmittel, beispielsweise Kapillaröhrchen oder Injektionspacker führt.

Der hohe Kalziumgehalt ist auch dafür verantwortlich, dass der behandelte Untergrund für einen nachfolgenden Anstrich oder Klebauftrag nicht haftungsfähig ist.

Für die Sanierung von Mauerwerken, insbesondere zur Trockenlegung oder Einbringen von Horizontalsperren ist es bekannt (beispielsweise DE 42 00 122 A1), hydrophobierende oder abdichtende Lösungen in das Mauerwerk über Bohrlöcher und Injektionspacker bzw. Kapillarröhrchen einzubringen. Bisher wurden durchweg Injektions- bzw. Imprägnierlösungen auf Kunststoffbasis wie Isocyanatgruppen aufweisende Verbindungen (DE 197 06 904 A1), Organoalkoxysilan (DE 195 13 238 A1, DE 196 05 674 A1, EP 344 919 B1), Wasser-in-Öl-Emulsionen (DE 101 30 091 A1), siliziumorganische Verbindungen (DE 39 11 479 A1) eingesetzt, die durch Vernetzung bzw. chemische Reaktion eine flüssigkeitsdichte Horizontalsperre im Mauerwerk erzeugen.

Aus der DE 44 18 441 A1 ist auch ein Harzbildner aus pflanzlichen Ölen mit korrespondierenden Esterderivaten zum Abdichten poröser Bauflächen gegen Feuchtigkeit bekannt.

Allen diesen bekannten Mitteln ist der Nachteil gemeinsam, dass jedes der bekannten Mittel nur ein spezielles Einsatzgebiet abdeckt und somit von seiner Anwendungsbreite deutlich eingeschränkt ist. Je nach den Anforderungen müssen deshalb unterschiedliche Imprägnier- bzw. Injektionsmittel eingesetzt werden, die außerdem hinsichtlich Toxizität, Entzündlichkeit und Geruch unkritisch sein müssen.

Bei diesem Stand der Technik liegt der Erfindung die Aufgabe zugrunde, ein Mittel, ein Verfahren und Verwendungen der eingangs genannten Art anzugeben, mit denen es möglich ist, kapillarporige Baustoffe von Alt- und Neubauten, Mineralgemische und Mineralfarben gleichermaßen mit hoher Wirksamkeit und einfacher Handhabung unter Erreichung einer langen Schutzdauer lösungsmittel- und kunstharzfrei zu hydrophobieren und/oder gegen Feuchtigkeit zu sperren, ohne dass eine nachfolgende Beschichtung des Baustoffs beeinträchtigt, seine Dampfdurchlässigkeit stark verringert und die Eigenfarbe des Baustoffes, des Mineralgemisches oder der Mineralfarbe verändert wird.

Diese Aufgabe wird durch ein Mittel der eingangs genannten Gattung mit den kennzeichnenden Merkmalen der Ansprüche 1 bis 3, durch ein Verfahren mit den kennzeichnenden Merkmalen des Anspruches 9, 18 und 28 sowie durch eine Verwendung nach den Ansprüchen 3 bis 35 gelöst.

Vorteilhafte Ausgestaltungen sind den Unteransprüchen entnehmbar.

Das erfindungsgemäße Mittel zeichnet sich vor allem dadurch aus, dass es erstmals gelungen ist, ein rein anorganisches Mittel zur Verfügung zu stellen, welches für den vorbeugenden oder auch nachträglichen Feuchtigkeitsschutz von Baustoffen, die Vergütung von Mörtel, Estrich, Schlämmen oder Beton sowie die Hydrophobierung von Mineralfarben gleichermaßen geeignet ist.

Dies ermöglicht den Einsatz des erfindungsgemäßen Mittels für Imprägnierungen, Abdichtungen und Konservierungen von kapillarporigen Baustoffen im Alt- und Neubau, die Oberflächenabdichtung und -konservierung, das Einbringen von Horizontalsperren gegen aufsteigende Feuchtigkeit im Mauerwerk sowie das dauerhafte Trockenlegen und Trockenhalten von Mauerwerk.

Das erfindungsgemäße Mittel enthält Bestandteile, die lösungsmittel- und kunstharzfrei, geruchlos und toxilogisch unbedenklich sind. Das Mittel dringt gut und tief in die kapillarporige Struktur des Baustoffs ein, ohne dass die Poren zugesetzt werden, wodurch sich die Diffusionsfähigkeit verbessert. Die Schutzwirkung des erfindungsgemäßen Mittels gegen eindringende Feuchtigkeit bzw. Wasser hält über einen langen Zeitraum unvermindert an, Salzausblühungen und Schimmelbildung werden dauerhaft verhindert.

Die mit dem erfindungsgemäßen Verfahren hergestellten Oberflächenabdichtungen sind alkalistabil, resistent gegen schädigende Umwelteinflüsse und lassen sich problemlos mit Putz und/oder Anstrichen bzw. Fliesen beschichten oder bekleben.

Das erfindungsgemäße Mittel lässt sich als einkomponentige Lösung im Tränke- und Penetrationsverfahren in den kapillarporigen Baustoff im Niederdruck als auch bei erhöhten Druck verbringen. Die bisher übliche Verfahrensweise, Bohrlöcher in das Mauerwerk einzubringen und die einkomponentige Lösung des erfindungsgemäßen Mittels über Kapillarröhrchen dem Mauerwerk zuzuführen, kann beibehalten werden, ebenso die Arbeitsweise mit Packern zur Herstellung einer Horizontalsperre.

Auch zur Vergütung von Mineralgemischen, beispielsweise Sanierputze, Sperrputze, Estriche, Dichtungsestriche und -schlämme und Beton, ist das erfindungsgemäße Mittel besonders vorteilhaft geeignet. Es wird einfach dem Anmachwasser zugesetzt und schränkt die kapillare Leitfähigkeit des Mineralgemisches stark ein, so dass dieselben wassersperrende Eigenschaften erhalten.

Es ist nur darauf zu achten, dass je nach der vorliegenden Aufgabenstellung für das entsprechende Mineralgemisch die Menge des zuzusetzenden Wassers eingehalten wird.

Besteht beispielsweise die Aufgabe darin, eine Horizontalsperre in einem alten Mauerwerk herzustellen, ist das erfindungsgemäße Mittel im Verhältnis von 1:15 anzumachen und durch Packer über die Bohrlöcher in das Mauerwerk zu verbringen.

Mineralfarben können ebenfalls mit dem Mittel hydrophobiert werden, in dem die Lösung der wässrigen Dispersion der als Anstrichmittel verwendeten anorganischen Bindenmittel wie Kalk, Weißzement oder Silicatfarben (Wasserglas) zugesetzt wird.

Die Erfindung soll nachstehend an mehreren Ausführungsbeispielen näher erläutert werden.

### Beispiel 1

In ein altes Mauerwerk soll eine Horizontalsperre gegen aufsteigendes Wasser nachträglich eingebracht werden. Der vorhandende Wandputz wird etwa 30 bis 50 cm über den dafür vorgesehenen Bereich abgeschlagen und loses Material entfernt. Die Fugen werden etwa 3 bis 5 cm ausgekratzt und alle Oberflächen staubfrei gereinigt.

Zur Anwendung kommt ein erfindungsgemäßes Mittel mit folgender Zusammensetzung:

| | |
|---|---|
| Wasser | 72 Masse-% |
| Kernseife | 17 Masse-% |
| Kaliumcarbonat | 4 Masse-% |
| Natriumhydroxid | 3 Masse-% |
| weißes Bariumsulfat | 4 Masse-%. |

Dieses Mittel wird mit reinem Leitungswasser im Verhältnis von einem Teil des Mittels zu 8 Teilen Wasser angemacht.

Der Fugenmörtel wird dann mit dem Anmachwasser vermischt, wobei die ausgekratzten Fugen vorher mit dem Anmachwasser eingenässt werden ist. Anschließend werden die Fugen "nass in nass" ausgefugt.

Nach einer Trockenzeit von etwa 3 Tagen werden in das Mauerwerk zwei parallel übereinander liegende Bohrreihen eingebracht. Die Bohrlöcher einer Reihe haben einen Abstand von etwa 10 cm und liegen linear nebeneinander. Die Bohrlöcher der oberen Reihe sind dabei so angeordnet, dass sie gegenüber den Bohrlöchern der unteren Reihe versetzt sind.

In die Bohrlöcher werden sodann handelsübliche Packer eingesetzt, die mit einer unter Niederdruck stehenden Befülleinrichtung für die Injektion verbunden sind.

Als Injektagelösung kommt das oben genannte näher spezifizierte Mittel zum Einsatz, das mit Wasser in einem Verhältnis von 1:15 verdünnt wird. Zunächst werden die Bohrlöcher der unteren Reihe mit der Injektagelösung verfüllt und durch Druck von 2 bis 4 bar in das die Bohrlöcher umgebende Kapillargefüge solange verpresst bis eine Sättigung des Gefüges erreicht ist. Es folgt die Verfüllung und Verpressung der oberen Bohrlöcher.

Je nach den konkreten Anforderungen an die Horizontalsperre kann das Mischungsverhältnis zwischen 1:8 bis 1:15 variieren. Nach Sättigung des Kapillargefüges mit Injektagelösung und deren Abbindung werden die Bohrungen mit Quellbeton oder Quellmörtel ausgefüllt.

Die betroffenen Wandbereiche werden anschließend mit einem Sanierputz verputzt, dem das erfindungsgemäße Mittel in einem Verhältnis von 1:8 bis 1:10 dem Anmachwasser zugegeben wurde.

Die Bestandteile des Mittels entsprechen der eingangs aufgeführten Zusammensetzung lediglich mit dem Unterschied, dass anstelle des weißen Bariumsulfats ein graues Bariumsulfat eingesetzt wird.

### Beispiel 2

Eine Wand eines alten Mauerwerks soll mit dem erfindungsgemäßen Mittel imprägniert werden.

Aus dem erfindungsgemäßen Mittel, dass 60 Masse-% Wasser, 22 Masse-% Kernseife, 6 Masse-% Kaliumcarbonat, 6 Masse-% Natriumhydroxid und 6 Masse-% weißes Bariumsulfat enthält, wird durch Zusetzen von 12 Teilen Wasser auf 1 Teil des erfindungsgemäßen Mittels eine Imprägnierlösung durch Rühren hergestellt. Das Auftragen der Imprägnierlösung erfolgt mittels Flutverfahren auf die sorgfältig gereinigte, staubfreie und abgetrocknete Wandfläche.

Nach Abtrocknung entsteht eine wetterbeständige, schmutzabweisende Oberfläche, die anstrichfähig ist.

### Beispiel 3

Ein Mauerwerk aus Kalksandsteinen soll zur Vorbereitung des Aufbringens einer Putzschicht mit einer Grundierung zur Verfestigung des Untergrundes versehen werden.

Ein Teil des erfindungsgemäßen Mittels aus 71 Masse-% Wasser, 18 Masse-% Kernseife, 4 Masse-% Kaliumcarbonat, 3 Masse-% Natriumhydroxid und 4 Masse-% graues Bariumsulfat wird mit 9 Teilen Wasser durch Rühren vermischt und die für den Grundierungsauftrag erforderliche Menge an Grundierlösung hergestellt.

Vor dem Auftrag der Grundierlösung muss der Untergrund vom alten, mürben oder verseuchten Putz befreit werden. Die Fugen sind mindestens 20 mm auszukratzen und alle Flächen durch Trocken- oder Feuchtstrahlen von Staub und anderweitigen Resten zu reinigen.

Das Auftragen der Grundierlösung erfolgt wie im Beispiel 2 beschrieben.

Die Grundierlösung dringt tief in die porige Struktur des Baustoffs ein, verfestigt die Oberfläche und bildet eine feste wasserabweisende Zone.

### Beispiel 4

Ein stark mit bauschädlichen Salzen belastetes historisches Mauerwerk mit einem Salzgehalt von 3 bis 6 Masse-% soll eine neue Verputzung erhalten.

Dem gesamten Anmachwasser für den Putzmörtel werden 10

Volumenteile des erfindungsgemäßen Mittels zugesetzt, wobei das erfindungsgemäße Mittel im Verhältnis 1:10 verdünnt wird. Das erfindungsgemäße Mittel hat eine Zusammensetzung aus 71 Masse-% Wasser, 18 Masse-% Kernseife, 3,4 Masse-% Kaliumcarbonat, 3,4 Masse-% graues Bariumsulfat und 4,2 Masse-% Natriumhydroxid.

Der Mörtel wird in einem Zwangsmischer gemischt und einlagig mit einer Schichtdicke von 2 cm aufgetragen. Die Oberflächenbearbeitung erfolgte ebenfalls nach dem historischen Vorbild.

Der Putz hat eine Standzeit von mehr als 20 Jahren.

### Beispiel 5

Es soll ein Spritzwassersockel, der durch aufsteigende Feuchtigkeit ein Wassergehalt zwischen 5 und 10 Masse-% hat, neu verputzt werden. Der Sockel muss nach dem Verputz dauerhaft ein ansehnliches Aussehen haben, d.h. es dürfen keine Wasserflecken und andere Verfärbungen auf dem Sockel erkennbar sein. Der Sockel muss des weiteren wasserabweisende Eigenschaften besitzen, die ein Eindringen von Spritzwasser verhindern.

Dem Anmachwasser für den Putzmörtel werden 10 bis 12

Volumenteile des erfindungsgemäßen Mittels zugegeben, was einer Verdünnung des erfindungsgemäßen Mittels von 1:10 bis 1:12 entspricht.

Der so zugestellte Mörtel wird in einem Zwangsmischer gegeben, gemischt, anschließend einlagig mit einer Schichtdicke von 2 cm aufgetragen und nach Anzug abgerieben.

Der Putz hat eine Standzeit von mehr als 20 Jahren. Da der Putz wasserabweisend ist, wird er durch Spritzwasser nur geringfügig verschmutzt. Eine Farbbeschichtung ist nicht notwendig.

## Patentansprüche

1. Mittel zum Behandeln, insbesondere Imprägnieren, Abdichten, Sperren, Verfestigen, Konservieren, Trockenlegen und/oder Trockenhalten von kapillarporigen Baustoffen wie Ziegel-, Natur- und Kalksandsteine und/oder Betonwerkstoffe, **dadurch gekennzeichnet, dass** das Mittel 60,0 bis 75,0 Masse-% Wasser, 15,0 bis 22,0 Masse-% Seife, 1,0 bis 7,0 Masse-% einer Carbonatverbindung, 2,0 bis 6,0 % Masse-% Natriumhydroxid und 1,0 bis 7,0 Masse-% Füllstoffe enthält.

2. Mittel zum Vergüten, insbesondere Hydrophobieren, Sperren und Verfestigen von Mineralgemischen wie Mörtel, Estrich, Schlämmen und Beton, **dadurch gekennzeichnet, dass** das Mittel 60,0 bis 75,0 Masse-% Wasser, 15,0 bis 22,0 Masse-% Seife, 1,0 bis 7,0 einer Carbonatverbindung, 2,0 bis 6,0 % Masse-% Natriumhydroxid und 1,0 bis 7,0 Masse-% Füllstoff enthält.

3. Mittel zum Hydrophobieren von Mineralfarben, **dadurch gekennzeichnet, dass** das Mittel 60,0 bis 75,0 Masse-% Wasser, 15,0 bis 22,0 Masse-% Seife, 1,0 bis 7,0 einer Carbonatverbindung, 2,0 bis 6,0 % Masse-% Natriumhydroxid und 1,0 bis 7,0 Masse-% Füllstoff enthält.

4. Mittel nach Anspruch 1 bis 3, **dadurch gekennzeichnet, dass** die Seife eine Kernseife ist.

5. Mittel nach Anspruch 1 bis 3, **dadurch gekennzeichnet, dass** die Carbonatverbindung Kaliumcarbonat ist.

6. Mittel nach Anspruch 1 bis 3, **dadurch gekennzeichnet, dass** die Gewichtsanteile für die Carbonatverbindung und die Füllstoffe aufeinander abgestimmt sind.

7. Mittel nach Anspruch 6, **dadurch gekennzeichnet, dass** die Gewichtsanteile untereinander gleich groß sind.

8. Mittel nach Anspruch 1 bis 7, **dadurch gekennzeichnet, dass** der Füllstoff Bariumsulfat, Talkum, Titandioxid, Marmormehl, Feldspat oder ein Gemisch aus diesen Stoffen enthält.

9. Verfahren zum Behandeln, insbesondere Hydrophobieren, Imprägnieren, Abdichten, Sperren, Verfestigen, Konservieren, Trockenlegen und/oder Trockenhalten von kapillarporigen Baustoffen wie Ziegel-, Natur- und Kalksandsteine und/oder Betonwerkstoffe mit einem Mittel nach Anspruch 1, **dadurch gekennzeichnet, dass** zum Behandeln ein Mittel aus 60,0 bis 75,0 Masse-% Wasser, 15,0 bis 22,0 Masse-% Seife, 1,0 bis 7,0 Masse-% einer Carbonatverbindung, 2,0 bis 6,0 % Masse-% Natriumhydroxid und 1,0 bis 7,0 Masse-% Füllstoff verwendet wird, das mit 8 bis 15 Teilen Wasser verdünnt, auf das Mauerwerk aufgetragen oder in das Mauerwerk verbracht wird.

10. Verfahren nach Anspruch 9, **dadurch gekennzeichnet, dass** als Seife Kernseife verwendet wird.

11. Verfahren nach Anspruch 9, **dadurch gekennzeichnet, dass** als Carbonatverbindung Kaliumcarbonat verwendet wird.

12. Verfahren nach Anspruch 9, **dadurch gekennzeichnet, dass** die Gewichtsanteile für die Carbonatverbindung und die Füllstoffe aufeinander abgestimmt werden.

13. Verfahren nach Anspruch 9, **dadurch gekennzeichnet, dass** das Verhältnis von Carbonatverbindung und Füllstoffe auf etwa 1:1 eingestellt wird.

14. Verfahren nach Anspruch 9, **dadurch gekennzeichnet, dass** als Füllstoff Bariumsulfat, Talkum, Titandioxid, Marmormehl, Feldspat oder ein Gemisch aus diesen Stoffen verwendet wird.

15. Verfahren nach Anspruch 9, **dadurch gekennzeichnet, dass** zum Imprägnieren des Mauerwerks das Mittel mit 10 bis 12 Teilen Wasser verdünnt wird.

16. Verfahren nach Anspruch 9, **dadurch gekennzeichnet, dass** zum Abdichten und Sperren des Mauerwerks durch eine Horizontalsperre das Mittel mit 8 bis 15 Teilen Wasser verdünnt wird.

17. Verfahren nach Anspruch 9, **dadurch gekennzeichnet, dass** zum Verfestigen (Grundieren) der Mauerwerksoberfläche das Mittel mit 9 bis 10 Teilen Wasser verdünnt wird.

18. Verfahren zum Vergüten, insbesondere Hydrophobieren, Sperren und Verfestigen von Mineralgemischen wie Mörtel, Estrich, Schlämme und Beton mit einem Mittel nach Anspruch 2, **dadurch gekennzeichnet, dass** zum Vergüten ein Mittel aus 60,0 bis 75,0 Masse-% Wasser, 15,0 bis 22,0 Masse-% Seife, 1,0 bis 7,0 Masse-% einer Carbonatverbindung, 2,0 bis 6,0 % Masse-% Natriumhydroxid und 1,0 bis 7,0 Masse-% Füllstoff verwendet wird, das dem Anmachwasser im Verhältnis von 1:8 bis 1:12 für Mörtel, Estrich, Schlamm oder Beton zugesetzt wird.

19. Verfahren nach Anspruch 18, **dadurch gekennzeichnet, dass** als Seife Kernseife verwendet wird.

20. Verfahren nach Anspruch 18, **dadurch gekennzeichnet, dass** als Carbonatverbindung Kaliumcarbonat verwendet wird.

21. Verfahren nach Anspruch 18, **dadurch gekennzeichnet, dass** die Gewichtsanteile für die Carbonatverbindung und die Füllstoffe im Mittel aufeinander abgestimmt werden.

22. Verfahren nach Anspruch 21, **dadurch gekennzeichnet, dass** das Verhältnis von Carbonatverbindung und Füllstoffe auf etwa 1:1 eingestellt wird.

23. Verfahren nach Anspruch 18, **dadurch gekennzeichnet, dass** als Füllstoff Bariumsulfat, Talkum, Titandiaoxid, Marmormehl, Feldspat oder ein Gemisch aus diesen Stoffen verwendet wird.

24. Verfahren nach Anspruch 18, **dadurch gekennzeichnet, dass** das Mittel mit 8 bis 10 Teilen Wasser verdünnt wird.

25. Verfahren nach Anspruch 18, **dadurch gekennzeichnet, dass** für den Sanierputz das Mittel mit 10 Teilen Wasser verdünnt wird.

26. Verfahren nach Anspruch 18, **dadurch gekennzeichnet, dass** für den Sperrputz das Mittel mit 8 Teilen Wasser verdünnt wird.

27. Verfahren nach Anspruch 18, **dadurch gekennzeichnet, dass** das Mittel zum Sperren von Estrich bzw. Schlamm mit 8 bis 10 Teilen Wasser verdünnt wird.

28. Verfahren zum Hydrophobieren von Mineralfarben, **dadurch gekennzeichnet, dass** zum Hydrophobieren der Farben ein Mittel aus 60,0 bis 75,0 Masse-% Wasser, 15,0 bis 22,0 Masse-% Seife, 1,0 bis 7,0 Masse-% einer Carbonatverbindung, 2,0 bis 6,0 % Masse-% Natriumhydroxid und 1,0 bis 6,0 Masse-% Füllstoff verwendet wird, dass der Mineralfarbe verdünnt zugesetzt und mit dieser durch Rühren vermischt wird.

29. Verfahren nach Anspruch 28, **dadurch gekennzeichnet, dass** als Seife Kernseife verwendet wird.

30. Verfahren nach Anspruch 28, **dadurch gekennzeichnet, dass** als Carbonatverbindung Kaliumcarbonat verwendet wird.

31. Verfahren nach Anspruch 28, **dadurch gekennzeichnet, dass** die Gewichtsanteile für die Carbonatverbindung und die Füllstoffe im Mittel aufeinander abgestimmt werden.

32. Verfahren nach Anspruch 31, **dadurch gekennzeichnet,** das Verhältnis von Carbonatverbindung und Füllstoffe im Mittel auf etwa 1:1 eingestellt wird.

33. Verwendung des Mittels nach Anspruch 1 zum Hydrophobieren, Imprägnieren, Abdichten, Sperren, Verfestigen, Konservieren, Trockenlegen und/oder Trockenhalten von kapillarporigen Baustoffen wie Ziegel-, Natur- und Kalksandsteinen und/oder Betonwerkstoffen.

34. Verwendung des Mittels nach Anspruch 2 zum Hydrophobieren, Sperren und Verfestigen von Mineralgemischen wie Mörtel, Estrich, Schlämmen und Beton.

35. Verwendung des Mittels nach Anspruch 3 zum Hydrophobieren von Mineralfarben.
